# EUROPÄISCHE PATENTANMELDUNG

(11) **EP 0 668 447 A2**
(43) Veröffentlichungstag der Anmeldung: **23.08.1995**
(21) Anmeldenummer: 95890034.2
(22) Anmeldetag: 20.02.1995
(51) Int. Cl.: F16C 9/04, F16C 33/10

(54) **Hydrodynamisches Gleitlager**

(30) Priorität: 21.02.1994 AT 340/94
(71) Anmelder: MIBA Gleitlager Aktiengesellschaft, A-4663 Laakirchen (AT)
(72) Erfinder: Ederer, Ulf Gerhard, Dipl.-Ing., A-4813 Altmünster (AT); Apfler, Georg, A-4810 Gmunden (AT)
(74) Vertreter: Hübscher, Heiner, Dipl.-Ing.

(57) **Zusammenfassung**

Es wird ein hydrodynamisches Gleitlager mit zwei in einem Lagerkörper (1) eingesetzten Lagerhalbschalen (2, 3) beschrieben, von denen eine die Hauptlast (P) aufnimmt. Um die Schmierbedingungen zu verbessern, wird vorgeschlagen, daß die geringer belastete Lagerhalbschale (3) eine gegenüber der Lagerhalbschale (2) für die Hauptlast (P) ein kleineres mittleres Lagerspiel ergebende größere mittlere Wanddicke über den Umfang aufweist.

## Beschreibung

Die Erfindung bezieht sich auf ein hydrodynamisches Gleitlager mit zwei in einem Lagerkörper eingesetzten Lagerhalbschalen, wobei die beiden Lagerhalbschalen, von denen eine die Hauptlast aufnimmt, zur Ausbildung unterschiedlich großer mittlerer Lagerspiele unterschiedliche mittlere Wanddicken über den Umfang besitzen.

Zum hydrodynamischen Aufbau eines tragenden Schmiermittelfilmes ist eine exzentrische Lage des drehenden Zapfens innerhalb der Lagerbohrung erforderlich. Diese Exzentrizität des Zapfens innerhalb des Lagerspiels bewirkt in dem dem engsten Spalt gegenüberliegenden Umfangsbereich eine entsprechende Vergrößerung des Lagerspaltes zwischen dem Zapfen und der Lagerbohrung, so daß ein Großteil des dem Gleitlager zugeförderten Schmiermittels durch diesen größeren Spaltbereich abfließt und lediglich ein vergleichsweise kleiner Teil des angeförderten Schmiermittels zum Aufbau des für das Lager notwendigen Schmiermittelfilms herangezogen werden kann. Mit der Verringerung des Lagerspieles kann zwar die dem Gleitlager zuzuführende Schmiermittelmenge wegen der dann geringeren Leckverluste über den Lagerspalt verkleinert werden, doch sind einer möglichen Spielverkleinerung Grenzen gesetzt, weil die Gefahren, die sich aus Form- und Maßabweichungen sowie aus einer Überhitzung aufgrund des verminderten Öldurchsatzes und des damit einhergehenden Zähigkeitsabfalles im Schmiermittelfilm ergeben, mit der Verringerung des Lagerspieles steigen.

Zur Verbesserung der Ermüdungsbeständigkeit hydrodynamischer Gleitlager ist es bekannt (DE 2 723 585 A1, EP 0 040 981 A1), die Abhängigkeit des Schmiermitteldruckes vom Lagerspiel zu einer Verringerung des Schmiermitteldruckes auszunützen, indem das Lagerspiel im Bereich der die Hauptlast aufnehmenden Lagerhalbschale verringert und zugleich das Lagerspiel im Bereich der anderen Lagerhalbschale vergrößert wird, um die durch das geringere Lagerspiel im Bereich der einen Lagerhalbschale höhere Wärmebelastung durch eine verbesserte Kühlung im Bereich der anderen Lagerhalbschale zumindest teilweise ausgleichen zu können. Sind die unterschiedlichen Lagerspiele im wesentlichen auf je eine Halbschale beschränkt (DE 2 723 585 A1), so können für die Lagerspielgestaltung Lagerhalbschalen mit entsprechend unterschiedlichen Wanddicken eingesetzt werden. Nachteilig bei diesen bekannten Lagern ist allerdings, daß das gegenüber herkömmlichen Lagern verringerte Lagerspiel für die die Hauptlast aufnehmende Lagerhalbschale die Empfindlichkeit des Lagers gegenüber Form- und Maßabweichungen steigert. Außerdem muß wegen der notwendigen zusätzlichen Kühlung die Schmiermittelzufuhr durch die Vergrößerung des Lagerspieles im Bereich der nicht der Hauptlast ausgesetzten Lagerhalbschale vergrößert werden.

Der Erfindung liegt somit die Aufgabe zugrunde, ein hydrodynamisches Gleitlager der eingangs geschilderten Art mit einfachen konstruktiven Mitteln so auszugestalten, daß der Schmiermittelbedarf merklich herabgesetzt werden kann, ohne das Lager durch eine höhere Empfindlichkeit gegenüber Geometriefehlern oder einer Überhitzung zu gefährden.

Die Erfindung löst die gestellte Aufgabe dadurch, daß die geringer belastete Lagerhalbschale zumindest in einem axialen Abschnitt eine gegenüber der Lagerhalbschale für die Hauptlast ein kleineres mittleres Lagerspiel ergebende größere mittlere Wanddicke über den Umfang aufweist.

Durch die ein kleineres mittleres Lagerspiel ergebende größere mittlere Wanddicke über den Umfang der weniger belasteten Lagerhalbschale wird der in diesem Bereich im Vergleich zur Lagerhalbschale für die Hauptlast sonst erheblich größere Lagerspalt entsprechend verringert, was eine Umverteilung des Schmiermittelflusses innerhalb des gesamten Lagerspaltes zur Folge hat.

Da sich die hydrodynamischen Bedingungen für den Aufbau eines Schmiermittelfilmes im Bereich der Lagerhalbschale für die Hauptlast nicht ändern, können mit herkömmlichen Gleitlagern hinsichtlich der Lastabtragung, der Empfindlichkeit gegenüber Geometriefehlern und einer Überhitzung vergleichbare Verhältnisse sichergestellt werden, allerdings mit dem wesentlichen Vorteil, daß der Schmiermittelbedarf erheblich verringert werden kann. Dies wirkt sich nicht nur in einer möglichen Herabsetzung der Förderleistung der Schmiermittelpumpe aus, sondern auch in einer Erhöhung der Zuverlässigkeit der Schmierung, weil das Schmiermittel rascher und in ausreichender Menge in den Lagerspalt zwischen dem Zapfen und der Lagerhalbschale für die Hauptlast gefördert werden kann. Der bei vergleichbarer Pumpenleistung höhere Schmiermitteldruck innerhalb des Lagerspaltes setzt außerdem die Kavitationsgefahr herab. Die zur Erzielung dieser Wirkung eingesetzten konstruktiven Mittel sind besonders einfach, weil die weniger belastete Lagerhalbschale zumindest in einem axialen Abschnitt mit einer entsprechend größeren Wanddicke ausgeführt werden muß, so daß in diesem axialen Abschnitt der Lagerspalt und damit der Strömungsquerschnitt für das Schmiermittel verringert wird. Der Aufbau der Lagerhalbschale im Bereich der Lauffläche bleibt von dieser Maßnahme unberührt.

Der mögliche Unterschied der Wanddicken der beiden Lagerhalbschalen hängt von dem jeweiligen Lagerspiel ab, das im Hinblick auf die Lagerhalbschale für die Hauptlast bestimmt wird. Die größere Wanddicke im Bereich der anderen Lagerhalbschale soll zwar den Lagerspalt in diesem Bereich verringern, darf aber zu keiner Berührung zwischen Zapfen und dieser Lagerhalbschale führen. Aus diesem Grunde kann den üblichen Bedingungen vorteilhaft entsprochen werden, wenn der Wanddickenunterschied dem 0,2 bis 0,6fachen, auf die Lagerhalbschale für die Hauptlast bezogenen Lagerspiel entspricht.

In der Zeichnung ist der Erfindungsgegenstand beispielsweise dargestellt. Es zeigen
- Fig. 1: ein herkömmliches, gattungsgemäßes Gleitlager in einem schematischen achsnormalen Schnitt und
- Fig. 2: ein erfindungsgemäßes Gleitlager in einer der Fig. 1 entsprechenden Darstellungsart.

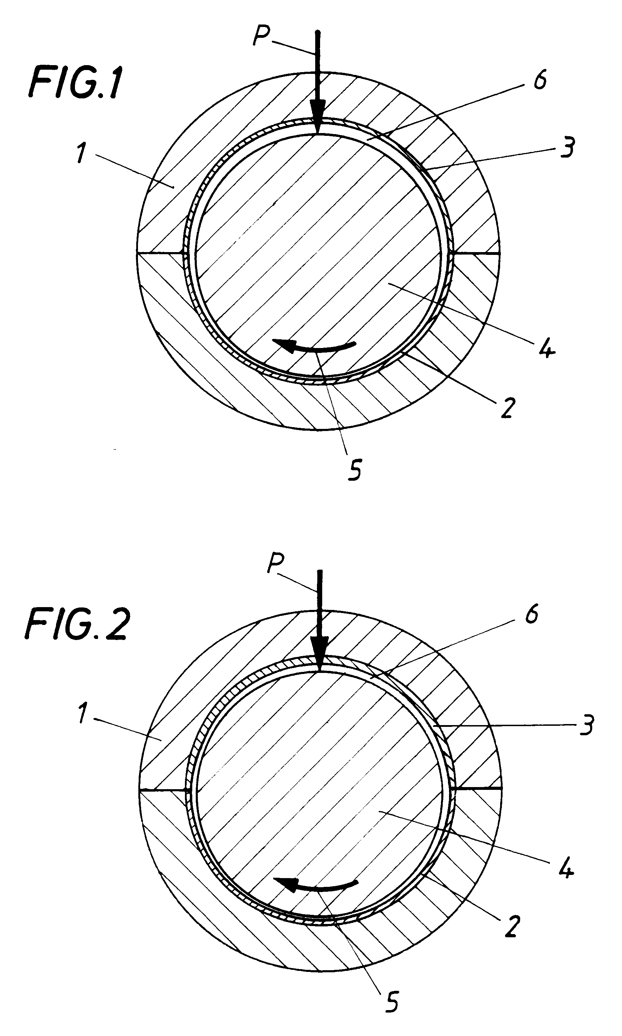

In der Fig. 1 sind die grundsätzlichen Verhältnisse hinsichtlich der Lastübertragung bei einem hydrodynamischen Gleitlager dargestellt, das aus zwei in einem geteilten Lagerkörper 1 eingesetzten Lagerhalbschalen 2 und 3 besteht, die beispielsweise eine gleichmäßige Wanddicke aufweisen, was jedoch nicht zwingend ist, weil die Wanddicke zu den Stirnseiten hin in axialer Richtung oder in Umfangsrichtung zum Stoß hin abnehmen könnte. Der von diesem Lager aufgenommene Zapfen 4 wird durch die Hauptlast P belastet und dreht innerhalb der Lagerbohrung im Sinne des Pfeiles 5, wobei er eine gegenüber der Bohrung exzentrische Lage einnimmt. Der Lagerspalt 6 zwischen dem Zapfen 4 und den Lagerschalen 2 und 3 bildet im Bereich der Lagerschale 2 zur Aufnahme der Hauptlast P einen sich im Drehsinn des Zapfens 4 verjüngenden Keilspalt, in dem ein tragender Schmiermittelfilm aufrechterhalten werden soll. Das Schmiermittel wird über eine aus Übersichtlichkeitsgründen nicht dargestellte Ölzuführöffnung in den Lagerspalt 6 gefördert, wobei über den Lagerspalt 6 im Bereich der weniger belasteten Lagerhalbschale 3 ein Großteil des angeförderten Schmiermittels abfließt. weil der Lagerspalt 6 in diesem Bereich aufgrund der exzentrischen Lage des Zapfens 4 einen entsprechend größeren Strömungsquerschnitt für das Schmiermittel bildet.

Wie der Fig. 2 entnommen werden kann, die eine mit der Fig. 1 übereinstimmende Lage des Zapfens 4 bezüglich der die Hauptlast P aufnehmenden Lagerhalbschale 2 zeigt, wird durch eine gegenüber der Lagerhalbschale 2 größere mittlere Wanddicke der Lagerhalbschale 3 der Lagerspalt 6 im Bereich dieser Lagerhalbschale 3 erheblich verringert, ohne die Lagerbedingungen im Bereich der Lagerhalbschale 2 zu verandern. Der damit verbundene kleinere Strömungsquerschnitt des Lagerspaltes 6 im Bereich der Lagerhalbschale 3 bedingt eine Drosselwirkung mit dem Ergebnis, daß die Leckverluste durch das im Bereich der Lagerhalbschale 3 abfließende Schmiermittel spürbar verringert werden. Der Wanddickenunterschied hängt dabei von dem vorgesehenen Lagerspiel ab und entspricht vorzugsweise dem 0,2 bis 0,6fachen Lagerspiel, das auf die Lagerhalbschale 2 für die Hauptlast P bezogen wird. Um im Stoßbereich der beiden Lagerhalbschalen 2 und 3 einen kontinuierlichen Übergang zu schaffen, nimmt die Wanddicke der Lagerhalbschale 3 gegen die Lagerhalbschale 2 hin ab.

Bei einem erfindungsgemäßen Gleitlager, das als Hauptlager für eine Kurbelwelle mit einem Zapfendurchmesser von beispielsweise 80 mm eingesetzt wird, beträgt die Wanddicke der Lagerhalbschalen z. B. 2 mm. Wird von einem üblichen Lagerspiel von 1 %o des Zapfendurchmessers ausgegangen, so beträgt das Lagerspiel 0,080 mm. Der Wanddickenunterschied zwischen den beiden Lagerhalbschalen soll somit zwischen 0,016 und 0,048 mm liegen. Dies bedeutet, daß die Wanddicke der geringer belasteten Lagerhalbschale zumindest im Scheitelbereich 2,016 bis 2,048 mm betragen kann.

Für einen Zapfendurchmesser von 400 mm und eine Wanddicke der Lagerhalbschale 2 von 10 mm ergibt sich bei einem Lagerspiel von 0,400 mm für die größte Wanddicke der Lagerhalbschale 3 ein Betrag zwischen 10,080 und 10,240 mm.

## Patentansprüche

1. Hydrodynamisches Gleitlager mit zwei in einem Lagerkörper (1) eingesetzten Lagerhalbschalen (2, 3), wobei die beiden Lagerhalbschalen (2, 3), von denen eine die Hauptlast (P) aufnimmt, zur Ausbildung unterschiedlich großer mittlerer Lagerspiele unterschiedliche mittlere Wanddicken über den Umfang besitzen, dadurch gekennzeichnet, daß die geringer belastete Lagerhalbschale (3) zumindest in einem axialen Abschnitt eine gegenüber der Lagerhalbschale (2) für die Hauptlast (P) ein kleineres mittleres Lagerspiel ergebende größere mittlere Wanddicke über den Umfang aufweist.

2. Hydrodynamisches Gleitlager nach Anspruch 1, dadurch gekennzeichnet, daß der Wanddickenunterschied dem 0,2 bis 0,6fachen, auf die Lagerhalbschale (2) für die Hauptlast (P) bezogenen, mittleren Lagerspiel entspricht.
